# EUROPÄISCHE PATENTSCHRIFT

(11) **EP 0 686 539 B1**
(45) Veröffentlichungstag und Bekanntmachung des Hinweises auf die Patenterteilung: **05.09.2001**
(21) Anmeldenummer: 95108785.7
(22) Anmeldetag: 07.06.1995
(51) Int. Cl.: B60T 8/00

(54) **Bremsanlage für Kraftfahrzeuge**
Braking device for vehicles
Installation de freinage pour véhicules

(30) Priorität: 08.06.1994 DE 4420061
(43) Veröffentlichungstag der Anmeldung: 13.12.1995
(73) Patentinhaber: Lucas Industries Limited, London W1Y 4DJ (GB)
(72) Erfinder: Schwarz, Michael, D-56566 Neuwied (DE)
(74) Vertreter: Schmidt, Steffen J., Dipl.-Ing.

(56) Entgegenhaltungen:
- EP-A- 0 405 114
- EP-A- 0 513 537
- EP-A- 0 566 344
- EP-A- 0 652 143
- DE-A- 4 034 847
- DE-A- 4 302 541
- DE-C- 4 406 128
- US-A- 4 610 483

## Beschreibung

Die Erfindung betrifft eine Bremsanlage für Kraftfahrzeuge mit den Merkmalen des Oberbegriffs des Anspruchs 1. Entsprechend einer Empfehlung der Automobilhersteller ist eine blockiergeschützte Bremsanlage heutzutage so auszulegen, daß die Bremsfähigkeit der Räder auf der Fahrbahn optimal ausgenutzt wird, wobei die Fahrstabilität und die Lenkbarkeit Priorität vor der Verkürzung des Bremsweges besitzen.

Von Bedeutung für den Bremsweg ist die Anpassung der Bremskraftverteilung auf die Vorder- und die Hinterachse, die sich aus der statischen und dynamischen Achslastverteilung eines Fahrzeuges ergibt. Je stärker ein Fahrer bremst, umso größer wird die dynamische Gewichtsverlagerung von der Hinter- zur Vorderachse, was beispielsweise bei einem unbeladenen Fahrzeug und/oder auf einer glatten Fahrbahnoberfläche dazu führen kann, daß die Hinterräder vor den Vorderrädern blockieren und wegen des Verlustes der Seitenführungskraft Bremsinstabilität entsteht, so daß eine hohe Schleudergefahr besteht. Um einem solchen sicherheitskritischen Zustand entgegenzuwirken, werden in bekannter Weise Bremskraftregler in der Bremsleitung zu den Hinterradbremsen installiert, die abhängig vom Beladungszustand des Fahrzeugs und/oder von der Fahrzeugverzögerung und/oder druckgesteuert den Bremsdruck an den Hinterrädern mindern.

Um die Gefahr blockierter Hinterräder entscheidend herabzusetzen, muß der Bremskraftregler auf den "worst-case" hinsichtlich zum Beispiel Beladungszustand des Fahrzeugs und/oder Beschaffenheit der Fahrbahnoberfläche ausgelegt werden. Die auf diese Weise bereitgestellte Bremskraftverteilung stellt in überwiegenden Bremssituationen nur eine grobe Annäherung an die reale statische und dynamische Achslastverteilung dar. Dies hat zur Folge, daß die Hinterachse unterbremst ist, da der weitaus größte Bremskraftanteil auf die Vorderräder übertragen wird, wodurch der Bremsweg verlängert wird.

Durch die Ausrüstung der Fahrzeugbremsanlagen mit Antiblokkierregelsystemen wurde die Möglichkeit eröffnet, mit den vorhandenen Mitteln auch die Bremskraftverteilung elektronisch zu regeln. Um dafür einen ungeminderten Druckaufbau auf die Hinterräder zu ermöglichen, beschreibt unter anderem die **DE-4030686** einen Bremskraftregler mit einer elektromagnetisch angetriebenen Sperrvorrichtung zur Deaktivierung der Druckminderungsfunktion, während das Antiblockierregelsystem und damit die elektronische Bremskraftverteilung in einwandfreiem Zustand arbeiten. Damit ist die Sicherheitsfunktion gegeben, daß bei einem defekten Antiblokkiersystem der Bremsdruck auf die Hinterräder gemindert wird.

Bei einer solchen Lösung besteht immer noch der Nachteil, daß der maximal zur Verfügung stehende Bremsdruck durch die Charakteristik des Bremskraftverstärkers und die vom Fahrer eingebrachte Bremspedalstellung bestimmt ist. Bedingt durch die dynamische Achslastverteilung wird eine Antiblockierregelung im Normalfall zuerst an den Vorderrädern einsetzen. Da ein durchschnittlicher Fahrer die Bremspedalkraft nach Eintritt in die Antiblockier-Regelphase aber nicht weiter erhöht, ist der Bremsdruck beispielsweise bei einem beladenen Fahrzeug und/oder auf einer griffigen Fahrbahnoberfläche nicht ausreichend, um auch an den Hinterrädern eine Antiblockierregelung zu bewirken, so daß die Hinterachse unterbremst ist und sich der Bremsweg verlängert.

Um dem entgegenzuwirken zeigt die **DE-3425672** eine mit einem zusätzlichen Bremsdruckgeber-Aggregat ausgerüstete Bremsanlage, mit dem der Bremsdruck auf die Hinterräder unabhängig von dem durch die Bremspedalstellung vorgegebenen Druckniveau aufbaubar und variierbar ist.

Nachteilig ist allerdings, daß die Realisierung dieser Lösung zusätzlicher Komponenten wie eines Bremsdruckgeber-Aggregates und eines Mehrwegeventils bedarf, was zusätzlichen Einbauraum erfordert, einen großen Aufwand darstellt und somit mit hohen Kosten verbunden ist.

Aus der **DE-4028290** ist ein Verfahren zur Verkürzung des Bremsweges in kritischen Fahrsituationen bekannt. Dabei wird ein automatischer Bremsvorgang durch Aufbau eines größeren als sich aus der Bremspedalstellung ergebenen Bremsdrucks ausgelöst, wofür als Mittel ein elektronisch betätigbarer Bremskraftverstärker, wie er beispielsweise durch die DE-4211849 bekannt ist, zur Anwendung kommt.

Das Verfahren nach der **DE-4028290** hat den Nachteil, daß als Kriterium für den automatischen Bremsvorgang einzig die durch den Fahrer veranlaßte Betätigungsgeschwindigkeit des Bremspedals dient.

Aus der nachveröffentlichten **DE 44 06 128 C1** ist ein Verfahren zur Durchführung eines automatischen Bremsvorgangs für eine Kraftfahrzeug-Bremsanlage mit einem Antiblockiersystem bekannt, bei dem während des automatischen Bremsvorgangs die Pedalstellung und der Bremsdruck für die nicht ABS-geregelten Räder so korreliert werden, daß dieser Bremsdruck nicht größer ist als es der Stellung der Bremsbetätigungseinrichtung im Falle einer Normalbremsung entspricht. Durch diese Anordnung soll ein möglichst kurzer Bremsweg unter bestmöglicher Wahrung der Bremsinformation für den Fahrer erreicht werden.

In der EP 0 513 537 A1 ist eine hydraulische Fahrzeugbremsanlage mit Blockierschutzeinrichtung beschrieben, bei der beim Auftreten von Radblockiergefahr an wenigstens einem Rad unmittelbar die Bremskraftverstärkung angehoben und dabei im Hauptbremszylinder ein höherer Druck erzeugt wird. Mittels dieses höheren Druckes werden die Bremskräfte der Hinterräder gesteigert, bis schließlich die Blockierschutzeinrichtung unzulässige Bremsdruckanstiege abbricht. Auch hier ist das Hauptaugenmerk die Verkürzung des Bremsweges, wobei Fahrstabilität und Lenkbarkeit des Fahrzeuges bei dieser Anordnung außer Betracht bleiben. Darüber hinaus liegt das Hauptaugenmerk in diesem Dokument auf der sehr speziellen Ausgestaltung der Fahrzeugbremsanlage mit einem Doppelmembran-Bremskraftverstärker sowie dessen spezieller Verschaltung und nicht auf einer besonderen Betriebsweise, wie es Gegenstand der vorliegenden Erfindung ist.

Der Erfindung liegt daher die Aufgabe zugrunde, eine Bremsanlage bereitzustellen, mit der eine Verkürzung des Bremsweges unter Ausschluß der zuvor geschilderten Nachteile erzielbar ist.

Die Lösung der Aufgabe erfolgt gemäß der Erfindung durch eine oben genannte Bremsanlage, die durch die kennzeichnenden Merkmale des Anspruchs 1 weitergebildet ist, wobei durch die Merkmale der Unteransprüche besonders vorteilhafte Ausführungsformen gekennzeichnet werden.

Ein weiterer Vorteil der Erfindung besteht darin, daß bei Aufbereitung und Verarbeitung des vom Meßsystem zur Erfassung der Bremspedalbetätigung bereitgestellten Signals in dem elektronischen Steuergerät des Antiblockierregelsystems, ein speziell für den elektronisch betätigbaren Bremskraftverstärker vorgesehenes elektronisches Steuergerät nicht mehr erforderlich ist.

Damit besteht der Vorteil, daß auch fahrdynamische Einflüsse als Entscheidungskriterium für eine Auslösung des elektronisch betätigbaren Bremskraftverstärkers in kritischen Bremssituationen berücksichtigt werden können, da eine logische Verknüpfung des Bremspedalbetätigungssignals mit den Raddrehzahlsignalen auf einfache Weise herstellbar ist.

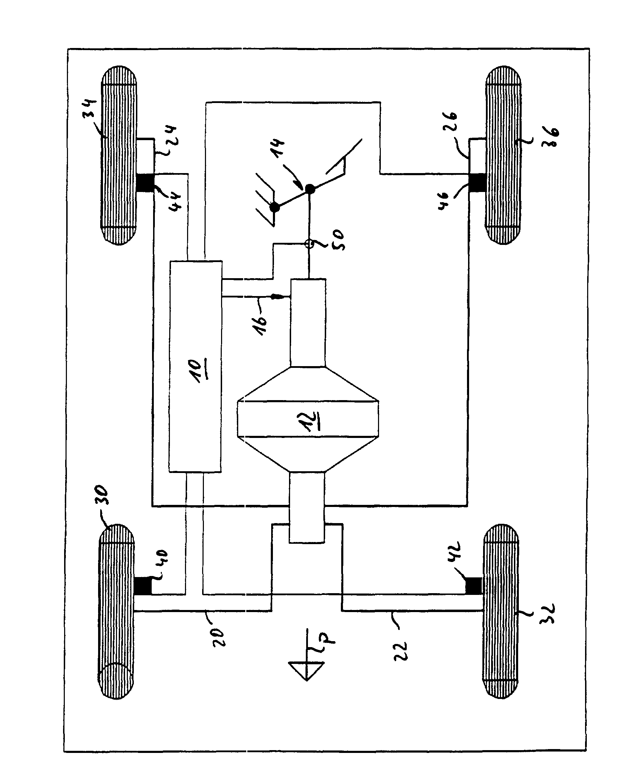

In der Zeichnung ist eine erfindungsgemäße Bremsanlage für Kraftfahrzeuge schematisch veranschaulicht. Die Bremsanlage hat eine elektronische Antiblockiereinrichtung 10 und einen Bremskraftverstärker 12, der durch ein Bremspedal 14 betätigbar ist. Darüberhinaus ist der Bremskraftverstärker 12 auch durch von der Antiblockiereinrichtung 10 über eine Leitung 16 abgebbare Signale in einer Weise betätigbar, daß durch das Signal ein nicht gezeigter Elektromagnet in dem Bremskraftverstärker 12 ein Ventil betätigt, das eine Betätigungsstellung des Bremskraftverstärkers 12 bewirkt, dessen Auslenkung größer ist als sie der Bremspedalbetätigungsstellung entspräche. Dies ruft wiederum einen Bremsdruck in den Leitungen 20, 22, 24, 26 von dem Bremskraftverstärker 12 zu den Bremsen der Räder 30, 32, 34, 36 hervor, der über dem sich aus der momentanen Bremspedalstellung ergebenden Bremsdruck liegt.

Dieses Signal ist von den unterschiedlichsten Kriterien ableitbar.

In der gezeigten Ausführungsform der Erfindung ist das Signal dann erzeugbar, wenn das erste in Fahrtrichtung (siehe Pfeil P) vorne liegende Rad 30 und ggf. auch das Rad 32 an der Vorderachse sich in einem antiblockier-geregelten Bremszustand befindet. Dies wird durch Sensoren 40, 42 an den Rädern 30, 32 bzw. deren Bremsen erfaßt. Zur Erhöhung der Sicherheit kann das Signal erst dann erzeugt werden, wenn das erste Rad 30 (und ggf. auch das Rad 32) für eine vorbestimmte erste Zeitspanne t1 im antiblockier-geregelten Bremszustand ist.

Weiterhin kann das Signal erst dann erzeugt werden, wenn ein vorbestimmter Verzögerungswert a für das Fahrzeug erreicht wird. Dies wird durch einen nicht gezeigten Beschleunigungssensor gemessen und in der Antiblockiereinrichtung 10 entsprechend zur Erzeugung des Signals ausgewertet.

Statt dessen kann das Signal auch erzeugt werden, wenn ein vorbestimmter Geschwindigkeitswert v für das Fahrzeug erreicht wird, der durch einen ebenfalls nicht gezeigten Geschwindigkeitssensor erfaßt wird.

Schließlich kann das Signal dadurch erzeugt werden, daß durch ein nicht veranschaulichtes Abstandsradargerät ein vorbestimmter Abstand s zu einem voranfahrenden Fahrzeug gemessen wird und eine entsprechende Information an die Antiblockiereinrichtung 10 weiterleitet.

Außerdem kann das Signal dann erzeugt werden, wenn das Drehzahlverhalten des ersten Rades 30, 32 einen vorbestimmten Verlauf hat.

In einer weiteren Ausführungsform wird das Signal dann erzeugt wird, wenn durch einen Sensor 50 eine vorbestimmte Bremspedalbetätigungsgeschwindigkeit vped oder Bremspedalbetätigungsbeschleunigung aped des Bremspedals 14 gemessen wird.

Die vorstehend erläuterten Kriterien (oder Kombinationen dieser Kriterien) erzeugen das Signal, das die Betätigung des Bremskraftverstärkers 12 vorzugsweise in der Weise bewirkt, daß dieser seinen maximal möglichen Bremsdruck erzeugt.

Da das vordere Rad(paar) 30 (, 32) sich im ABS-geregelten Zustand befindet, hat dies keinen Einfluß auf dessen (deren) Bremsverhalten. Allerdings wird auf diese Weise ein größerer Bremsdruck auch für das hintere Rad(paar) 34 (,36) erzeugt, so daß die Bremsleistung sich insgesamt erhöht. Da auch das hintere Rad(paar) 34 (,36) mit Sensoren 44, 46 ausgestattet ist, um zu erkennen, ob das entsprechende Rad sich dem Blockierzustand nähert oder sich bereits in ihm befindet, kann auch die ABS-Einrichtung 10 ein Blockieren des hinteren Rad(paar)es 34 (,36) verhindern. Dazu regelt die ABS-Einrichtung 10 über nicht gezeigte Ventile in den Leitungen 20, 22, 24, 26 den Bremsdruck der einzelnen Räder.

Mit anderen Worten wird in Abhängigkeit von einem aus einem Bremszustand an einem ersten Rad 30, 32 des Kraftfahrzeuges abgeleiteten Kriterium ein Signal erzeugt, das eine Änderung des Bremszustandes eines zweiten Rades 34, 36 des Kraftfahrzeuges hervorruft.

Der Bremsdruck an dem zweiten Rad 34, 36 wird nämlich soweit erhöht, daß dieses ebenfalls in einen antiblockier-geregelten Bremszustand gelangt.

Das Signal wird wieder abgeschaltet, wenn das jeweilige vorstehend genannte Kriterium nicht mehr vorliegt oder um einen entsprechenden vorbestimmten Wert unterschritten wird. Außerdem kann die Unterschreitung des jeweiligen Wertes, die Abweichung von einem Sollverlauf der Radgeschwindigkeit etc. auch erst dann eine Abschaltung des Signals bewirken, wenn dieser Zustand für eine bestimmte Zeitdauer t2 anhält. Dies führt zu einem ruhigeren Bremsverhalten.

## Patentansprüche

1. Bremsanlage für Kraftfahrzeuge, mit einer elektronischen Antiblockiereinrichtung (10) und einem Bremskraftverstärker (12), der auch durch von der Antiblockiereinrichtung (10) abgebbare Signale betätigbar ist, wobei in Abhängigkeit von einem aus einem Bremszustand an wenigstens einem ersten Rad (30, 32) des Kraftfahrzeuges abgeleiteten Kriterium ein Signal erzeugbar ist, das eine Änderung des Bremszustandes wenigstens eines zweiten Rades (34, 36) des Kraftfahrzeuges hervorruft, **dadurch gekennzeichnet**, daß
- das Signal erst dann erzeugt wird, wenn das erste Rad (30, 32) für eine vorbestimmte erste Zeitspanne t1 in einem antiblockier-geregelten Bremszustand ist, und/oder
- ein Beschleunigungssensor einen Verzögerungswert a für das Fahrzeug mißt, und das Signal dann erzeugt wird, wenn dieser Wert a einen vorbestimmten Wert erreicht, und/oder
- ein Geschwindigkeitssensor einen Geschwindigkeitswert v für das Fahrzeug mißt, und das Signal dann erzeugt wird, wenn dieser Wert v einen vorbestimmten Wert erreicht.

2. Bremsanlage nach Anspruch 1, **dadurch gekennzeichnet**, daß das Signal eine Betätigung des Bremskraftverstärkers (12) hervorruft, die einen Bremsdruck bewirkt, der über dem sich aus einer Bremspedalstellung eines Bremspedals (14) ergebenden Bremsdruck liegt.

3. Bremsanlage nach Anspruch 1 oder 2, **dadurch gekennzeichnet**, daß das Signal aus dem Bremszustand wenigstens eines Vorderrades (30, 32) abgeleitet wird und zur Änderung des Bremszustandes wenigstens eines Hinterrades (34, 36) verwendet wird.

4. Bremsanlage nach einem der Ansprüche 1 bis 3, **dadurch gekennzeichnet**, daß das Signal dann erzeugt wird, wenn durch ein Abstandsradar des Kraftfahrzeuges ein vorbestimmter Abstand s zu einem voranfahrenden Fahrzeug gemessen wird.

5. Bremsanlage nach einem der Ansprüche 1 bis 4, **dadurch gekennzeichnet**, daß das Signal dann erzeugt wird, wenn durch einen Sensor (50) eine vorbestimmte Bremspedalbetätigungsgeschwindigkeit vped oder Bremspedalbetätigungsbeschleunigung aped gemessen wird.

6. Bremsanlage nach einem der Ansprüche 1 bis 5, **dadurch gekennzeichnet**, daß das Signal dann erzeugt wird, wenn der Drehzahlverlauf des ersten Rades (30, 32) eine vorbestimmte Gestalt hat.

7. Bremsanlage nach einem der Ansprüche 1 bis 6, **dadurch gekennzeichnet**, daß das Signal eine Betätigung des Bremskraftverstärkers (12) derart bewirkt, daß der Bremsdruck an dem zweiten Rad (34, 36) soweit erhöht wird, daß dieses ebenfalls in einen antiblockier-geregelten Bremszustand gelangt.

8. Bremsanlage nach einem der Ansprüche 1 bis 7, **dadurch gekennzeichnet**, daß das Signal eine so starke Betätigung des Bremskraftverstärkers (12) bewirkt, daß dieser seinen maximal möglichen Bremsdruck erzeugt.

9. Bremsanlage nach einem der vorhergehenden Ansprüche, **dadurch gekennzeichnet,** daß das Signal wieder abgeschaltet wird, wenn das oder die in den Ansprüchen 1 sowie 3 bis 6 genannte/genannten Kriterium/Kriterien nicht mehr vorliegt/vorliegen.

10. Bremsanlage nach einem der vorhergehenden Ansprüche, **dadurch gekennzeichnet**, daß das Signal wieder abgeschaltet wird, nachdem das oder die in den Ansprüchen 1 sowie 3 bis 6 genannte/genannten Kriterium/Kriterien um einen entsprechenden vorbestimmten Wert und/oder für eine vorbestimmte Zeitdauer t2 unterschritten wird/werden.

11. Bremsanlage nach einem der vorhergehenden Ansprüche, **dadurch gekennzeichnet**, daß das Signal durch die elektronische Antiblockiereinrichtung (10) erzeugt wird.

## Claims

1. A braking system for motor vehicles, comprising an electronic antiskid system (10) and a brake booster (12) which is also adapted to be actuated by signals being emitted by the antiskid system (10), wherein, in response to a criterion derived from a braking condition at at least one first wheel (30, 32) of the motor vehicle, a signal can be generated which causes a change of the braking condition of at least a second wheel (34, 36) of the motor vehicle, **characterised in that**
- the signal is generated only when the first wheel (30, 32) is in an antiskid-controlled braking condition for a predetermined first period of time t1, and/or
- an acceleration sensor measures a deceleration value a for the vehicle and the signal is generated when said value a reaches a predetermined value, and/or
- a speed sensor measures a speed value v for the vehicle and the signal is generated when said value v reaches a predetermined value.

2. The braking system according to claim 1, **characterised in that** the signal causes an actuation of the brake booster (12) which effects a braking pressure that is higher than the braking pressure resulting from a brake pedal position of a brake pedal (14).

3. The braking system according to claim 1 or 2, **characterised in that** the signal is derived from the braking condition of at least one front wheel (30, 32) and is used to change the braking condition of at least one rear wheel (34, 36).

4. The braking system according to one of claims 1 to 3, **characterised in that** the signal is generated when a distance sensor of the motor vehicle measures a predetermined distance s from a vehicle driving in front.

5. The braking system according to one of claims 1 to 4, **characterised in that** the signal is generated when a sensor (50) measures a predetermined velocity of brake pedal actuation vped or acceleration of brake pedal actuation vped.

6. The braking system according to one of claims 1 to 5, **characterised in that** the signal is generated when the course of the revolutions per minute of the first wheel (30, 32) has a predetermined configuration.

7. The braking system according to one of claims 1 to 6, **characterised in that** the signal effects an actuation of the brake booster (12) in such a manner that the brake pressure at the second wheel (34, 36) is increased to such an extent that it reaches an antiskid-controlled braking condition as well.

8. The braking system according to one of claims 1 to 7, **characterised in that** the signal effects such a strong actuation of the brake booster (12) that the latter generates its maximum brake pressure.

9. The braking system according to one of the preceding claims, **characterised in that** the signal is switched off when the criterion/criteria mentioned in claims 1 as well as 3 to 6 no longer exists/exist.

10. The braking system according to one of the preceding claims, **characterised in that** the signal is switched off as soon as the criterion/criteria mentioned in claims 1 as well as 3 to 6 is/are lower by a corresponding predetermined value and/or for a predetermined period of time t2.

11. The braking system according to one of the preceding claims, **characterised in that** the signal is generated by the electronic antiskid system (10).

## Revendications

1. Système de freinage pour véhicules automobiles comprenant un dispositif antiblocage électronique (10) et un servofrein (12) qui peut aussi être actionné par des signaux pouvant être délivrés par le dispositif antiblocage (10), dans lequel un signal peut être généré en fonction d'un critère dérivé d'un état de frein à au moins une première roue (30, 32) du véhicule, lequel signal provoque une modification de l'état de frein d'au moins une deuxième roue (34, 36) du véhicule automobile, **caractérisé en ce que**
- le signal n'est généré que lorsque la première roue (30, 32) se trouve pour une première durée prédéterminée t1 dans un état de frein régulé par antiblocage et / ou
- un capteur d'accélération mesure une valeur de décélération a pour le véhicule et le signal est généré lorsque cette valeur a atteint une première valeur prédéterminée et / ou
- un capteur de vitesse mesure une valeur de vitesse v et le signal est généré lorsque cette valeur v atteint une valeur prédéterminée.

2. Système de freinage selon la revendication 1, **caractérisé en ce que** le signal provoque un actionnement du servofrein (12) qui produit une pression de freinage qui est supérieure à celle résultant d'une position de pédale de frein d'une pédale de frein (14).

3. Système de freinage selon la revendication 1 ou 2, **caractérisé en ce que** le signal est dérivé de l'état de frein d'au moins une roue avant (30, 32) et est utilisé pour modifier l'état de frein d'au moins une roue arrière (34, 36).

4. Système de freinage selon l'une quelconque des revendications 1 à 3, **caractérisé en ce que** le signal est généré lorsqu'une distance s prédéterminée jusqu'à un véhicule précédent est mesurée par un radar de mesure de distance du véhicule automobile.

5. Système de freinage selon l'une quelconque des revendications 1 à 4, **caractérisé en ce que** le signal est généré lorsqu'une vitesse d'actionnement de pédale de frein prédéterminée vped ou une accélération d'actionnement de pédale de frein prédéterminée aped est mesurée par un capteur (50).

6. Système de freinage selon l'une quelconque des revendications 1 à 5, **caractérisé en ce que** le signal est généré lorsque les variations de vitesse de rotation de la première roue (30, 32) ont une configuration prédéterminée.

7. Système de freinage selon l'une quelconque des revendications 1 à 6, **caractérisé en ce que** le signal provoque un actionnement du servofrein (12) de telle nature que la pression de freinage à la deuxième roue (34, 36) soit amplifiée jusqu'à ce que celle-ci se retrouve également dans un état de frein régulé par système antiblocage.

8. Système de freinage selon l'une quelconque des revendications 1 à 7, **caractérisé en ce que** le signal produit un actionnement suffisamment fort du servofrein (12) pour que celui-ci génère sa pression de freinage la plus grande possible.

9. Système de freinage selon l'une quelconque des revendications précédentes, **caractérisé en ce que** le signal est à nouveau supprimé lorsque le ou les critère(s) cité(s) dans les revendications 1 ainsi que 3 à 6 a(ont) disparu.

10. Système de freinage selon l'une quelconque des revendications précédentes, **caractérisé en ce que** le signal est à nouveau supprimé après que le ou les critère(s) cité(s) dans les revendications 1 ainsi que 3 à 6 ont été dépassés vers le bas d'une valeur prédéterminée et / ou pendant une durée prédéterminée t2.

11. Système de freinage selon l'une quelconque des revendications précédentes, **caractérisé en ce que** le signal est généré par le dispositif antiblocage électronique (10).
